# EUROPEAN PATENT APPLICATION

(11) **EP 0 878 974 A1**
(43) Date of publication of application: **18.11.1998**
(21) Application number: 97830229.7
(22) Date of filing: 16.05.1997
(51) Int. Cl.: H04Q 7/22, H04Q 7/30

(54) **Communication method and a base transceiver station for a mobile radio communication system**

(71) Applicant: Italtel s.p.a., 20149 Milano (IT)
(72) Inventor: Colamonico, Armando, 20010 Arluno (MI) (IT); Donati, Marcello, 20131 Milano (IT)
(74) Representative: Giustini, Delio

(57) **Abstract**

The present invention is addressed to a communication method between a base transceiver station of a land mobile radio communication system and at least a mobile user in the coverage area of said base transceiver station. According to the invention the method is adapted to illuminating the coverage area assigned to the base transceiver station with an angular profile which can be dynamically modified. Preferably said profile dynamically modified is obtained:
- arranging, a plurality of n antennas (7) forming part of an array of antennas;
- receiving (3) n replicas of the original signal, phase shifted between them;
- converting in the digital form the above mentioned n replicas;
- performing the spectral translation in base band and filtering the digital signals relevant to the above mentioned n replicas of the original signal;
- processing (5) the above mentioned n replicas of the original signal to obtain parameters representing the signal arrival direction;
- reconstructing the original signal.

A cluster of base transceiver stations so configured enables to satisfy a higher number of users on the coverage area assigned, improving also the signal/noise ratio.

## Description

### Field of the Invention

The present invention relates to a communication method for portable set telephone systems and in particular it relates to a communication method between a base transceiver station of a cellular telephone system and one mobile user at least, in the area covered by said base transceiver station.

The invention refers also to a base transceiver station which can be implemented according to different embodiments.

The invention concerns also, but is not limited to, a cluster of cells or base transceiver station to enable the mobile users present in a coverage area to communicate and the following description is made making reference to said application field to the sole purpose to simplify the description.

As it is already known, a Base Transceiver Station (BTS) of a generic mobile system is an interfacing element capable to enable a communication between a mobile user present in a coverage area and another user, connected for instance to a fixed network or connected him too to a BTS.

The coverage area, also called basic cell is a function of the radiation diagram of the antenna or set of antennas present in the base transceiver station.

According to the antenna radiation diagram, the coverage shall be of the omnidirectional or sectorial type (typically 120°). In both the cases we always have a simple or compound radiation diagram, associated to the basic cell of the invariant time type.

Irrespective of the embodiment adopted and in order to obtain an even and capillary coverage of the territory capable to assure the communication of the mobile user there present, it is necessary to implement a plurality of base transceiver stations with adjacent coverage areas or cells.

Each single cell shall therefore avail of a different subassembly of carrier frequencies Nᵢ (radio channels) included in the Nₜₒₜ carrier frequencies offered by the communication standard adopted, to interface the mobile user present in the coverage area of the cell itself.

In this way, the use of the same carrier frequencies is prevented for the base transceiver stations having adjacent coverage areas. All the above is necessary to avoid the co-channel interference phenomenon, otherwise present if a sharing of the Nₜₒₜ carrier frequencies were not adopted.

The re-use of the same carrier frequencies is allowed only for those radio transceiver stations with sufficiently spaced coverage areas in order to consider the co-channel interference as neglectable.

In the known technique, reference is generally made to a group of cells called "cluster' having a corresponding group of base transceiver stations where each single cell or station employs a subgroup of carrier frequencies different from any other cell belonging to the cluster under consideration.

The re-use of the same subgroup of carrier frequencies is possible only for cells having a sufficient spacing and belonging to separate clusters.

All the above involves a serious restriction on the mobile telephone traffic which can be served by the single radio station since carrier frequencies (radio channels) available, always result to be in a limited number.

This problem is more accentuated for urban areas where the high density of mobile users results in having small size coverages with coverage radius lower than 1 km. This results in a non desired increase of base transceiver stations (BTS) present in urban areas.

### Background art

According to the known technique this problem cannot be solved since co-channel interference problems described above always lead to the construction of base transceiver stations configured according to the methods described below.

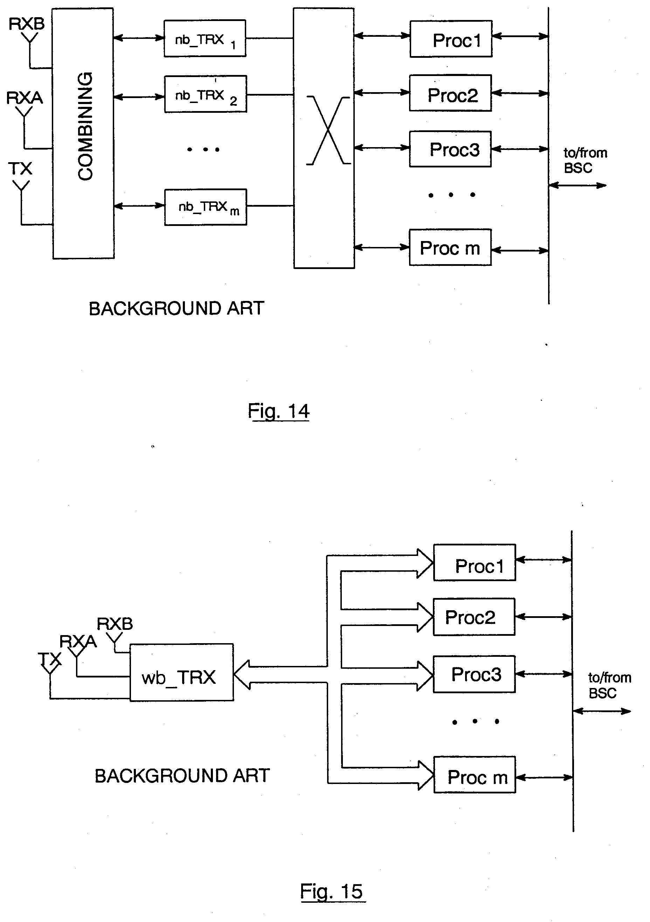

A first solution of the known technique, shown in figure 14, foresees that base transceiver stations are equipped with an omnidirectional antenna (in this specific case it is assumed to use a single transmitting antenna and two receiving antenna operating according to the space difference principle) connected to a combining system addressing a number of narrow band transceivers each one tuned on a carrier frequency of the m carrier frequencies assigned to said base transceiver station.

Each radio channel present at the output of the corresponding transceiver, is connected to a process module or more process modules through a dynamic matrix to enable the reconstruction of the m simultaneous telephone communications.

Though profitable under different aspects, this first solution has the serious disadvantage to augment its complexity when one decides to increase the number of radio channels assigned to the base transceiver station to increase the number of user to serve within the coverage area or cell.

In fact, the number of transceivers is equal to the number of radio channels assigned to the base transceiver station and the switching matrix has only the task to implement the "frequency hopping" function requested for instance by the GSM standard to distribute the unwanted defects deriving for instance from a signal propagation through multiple paths on all mobile sets for a short instant instead of permanently concentrating said noise on a single mobile/user set.

For mobile systems not foreseeing the "frequency hopping", the above mentioned matrix is completely redundant.

The increase in the number of telephone communications which can be served by the base transceiver stations at the same time requires an increase in the number of process modules and of the number of narrow band transceivers, with a consequent considerable increase of costs, mainly due to the cost of transceiver equipment. Process modules are in fact digital parts whose increase does not create particular problems.

A second known solution, shown in figure 15, foresees on the contrary the use of a unique broad band transceiver, generally identified in the specific technique with the term "software radio", capable to convert all the signals of the spectrum band associated to radio channels assigned to the base transceiver station into digital ones. A digital signal present at the output of the transceiver shall be distributed through a connection matrix or a m-process module bus, each module being dedicated to a particular user to reconstruct the corresponding communication.

In other words, the solution shown in figure 14 previously described, foresees the use of a plurality of narrow band transceivers, each of them including a band pass filtering element centred on a specific carrier frequency.

The solution in figure 15 foresees on the contrary the use of a broad band transceiver so that all the m process modules receive at input the signals picked up by the antenna. Each process module foresees the presence of a digital filtering element inside, in order that each process module actually analyses only signals related to a specific carrier frequency.

Though a so configured base transceiver station has a higher modularity facilitating the decoding of radio signals according to different standards, it does not effectively solve the problem tied to the limited number of users which can be served due to the limited number of available radio channels.

In fact, even this solution foresees the use of an omnidirectional antenna and does not solve in any way the problems related to the co-channel interference so that reuse of the same carrier frequency is possible only when radio signals have sufficiently attenuated.

In addition, assuming that radio channels assigned to the single base transceiver station of the radio software type can be augmented, a technological restriction, tied to the broad band transceiver, not sufficiently fast and not able to process too wide signals, is always present.

### Object of the Invention

Main object of the present invention is to identify a communication method for a radio communication systems not showing the drawbacks mentioned above making reference to the background art and enabling a reduction of the cell cluster.

Particular object is to implement a system where the use of the same radio channels in possible even for those base transceiver stations having coverage areas adjacent to the one considered, thus considerably increasing the number of telephone communications which can be served at the same time since all the available carrier frequencies can be assigned to all the base transceiver stations, without determining the rise of co-channel interference problems described above.

Reaching of these objects enables to overcome the present restrictions which compel each base transceiver station to use a limited number of radio channels, thus limiting the number of users which can be served at the same time within the coverage area

### Summary of the invention

The decisive approach to the technical problem has been to think to a cluster of base transceiver stations, where one base transceiver station at least is equipped with an intelligent radiant system capable to light the assigned coverage area with an angular profile which can be dynamically modified.

Profitably, the invention foresees that single users present in a coverage area are followed by an intelligent radiant system capable to dynamically modify its own radiation diagram so to concentrate the major part of radiated power in an angular direction where the user to be satisfied is present.

In other words, the present invention foresees that the cluster size is reduced thanks to the use of a dynamically modifiable radiation diagram since the adoption of said technical solution involves a decrease of the re-use distance of the same radio channel.

In this way, the number of radio channels assigned to the single stations (BTS) can result considerably higher, thus allowing to increase the number of users to satisfy at the same time in the assigned area.

These objects are solved, according to the invention, with the method of claim 1, the features of the base transceiver station of claim 7 and the features of a cluster of base transceiver stations of claim 26.

The features of the present invention which are believed to be novel are also set forth in the appended claims.

### Brief description of the Drawings

The invention, together with further objects and advantages thereof may be understood with reference to the following description, taking in conjuction with the accompaninyng drawings, in which:.
- Figure 1 outlines a cluster of cells or base transceiver stations identified by the sum of the coverage areas assigned to each station.
- Figure 2 shows the radiation diagrams of a plurality of cells forming the cluster obtained using an intelligent radiant system according to the invention.
- Figure 3 shows a possible critical situation among cells forming the cluster having adjacent coverage areas.
- Figure 4 shows a general block-diagram of the intelligent radiant system according to the invention used by one base transceiver station at least forming the cluster.
- Figure 5 shows a block diagram of a transceiver configured as receiver according to the invention.
- Figure 6 shows a block diagram of a transceiver configured as a transmitter according to the invention.
- Figure 7 is a possible embodiment of the general block diagram shown in figure 4, configured as a receiver according to the invention.
- Figure 8 shows in detail a WB_RX block in cascade to a DDC block used in the diagram of figure 7.
- Figure 9 is an additional embodiment of the general block diagram shown in figure 4, configured as a receiver according to the invention.
- Figure 10 is an additional embodiment of the general block diagram shown in figure 4, configured as a transmitter according to the invention.
- Figure 11 shows in detail a WB_TX block in cascade to a DUC block used in the diagram of figure 10.
- Figure 12 shows in detail a technical solution equivalent to the one in figure 10 using an analogue adder instead of a digital one.
- Figure 13 shows the principle of the production of n replicas of the signal which is at the basis of the present invention.
- Figure 14 represents a first solution of the known technique to configure a base transceiver station.
- Figure 15 represents a second solution of the known technique to configure a base transceiver station.

### Detailed description

Making reference to the above figures, two preferred embodiments of the invention are described, capable to overcome the problems and restrictions mentioned in the known art paragraph.

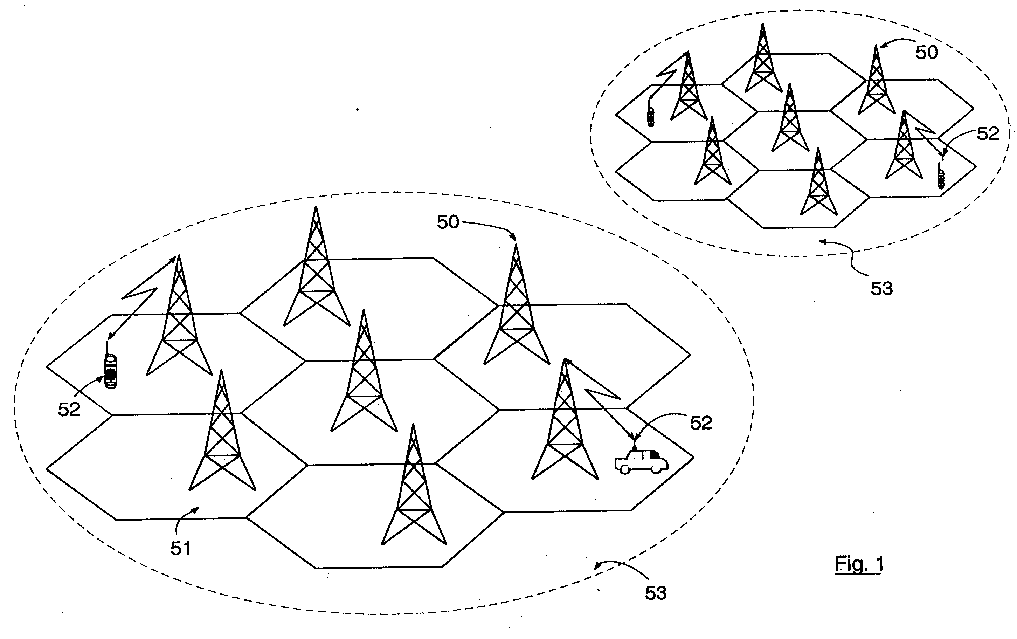

Figure 1 shows the diagram of a cluster 53 of base transceiver stations where each single station 50 (BTS) is associated to a corresponding cell 51 or coverage area, in the proper sense of the word.

The coverage area is a function of a radiating element, antenna or array of antennas, connected to the base transceiver station to interface during transmission and reception the terminals of mobile users 52 present in the area itself.

To solve the co-channel interference problem described before, this invention suggests to use, for at least one base transceiver station included in the cluster, of an intelligent radiant system capable to light the coverage area assigned with an angular profile which can be dynamically modified.

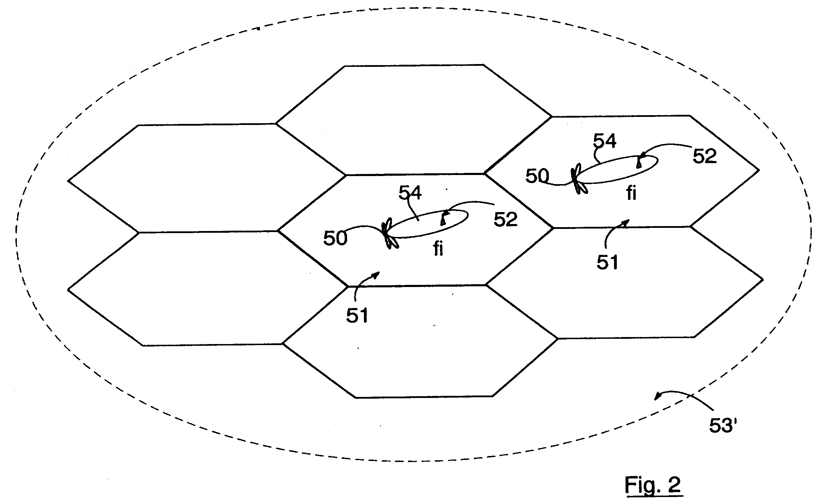

Figure 2 offers a radiation diagram 54 of the single cell of the directive type, in respect with a given angular direction evolving in time. Said angular direction shall result to be a function of the position taken by the mobile user 52 to be connected inside the coverage area 51.

A first advantage which can be attained by adopting such a solution is to be able to optimise the power radiated by the base transceiver station to connect the mobile user 52. In fact, it is evident to the skilled in the art, how said directivity in lighting only the angular direction associated to user 52 to be served, saves the power which was unfruitfully consumed before with the even and constant in time radiation.

This aspect of the invention suggested therefore to implement a new model of cell cluster or base transceiver stations (BTS) where the cells with adjacent coverage area would be assigned the same carrier frequencies.

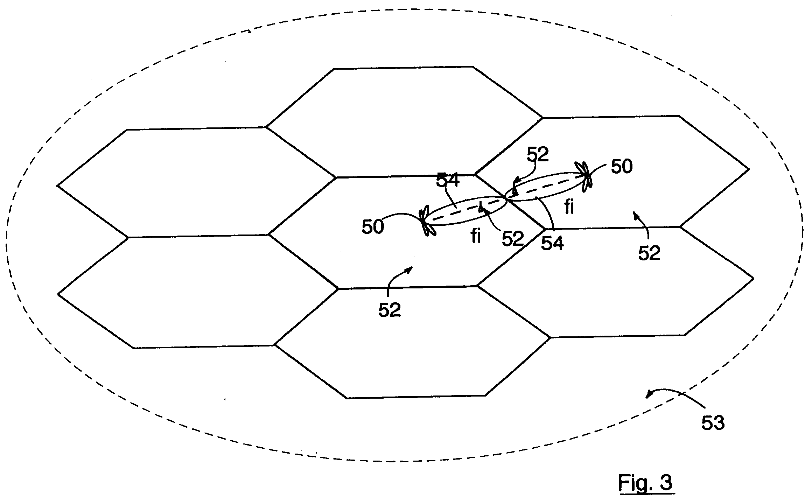

The directivity of the radiant system of the single base transceiver station 50 (BTS) enabled to considerably reduce the co-channel interference possibility because the conditions of the type shown in figure 3, in which the two mobile users 52 present in adjacent cells being assigned the same radio channel have coinciding angular directions, are highly unlikely.

Also, it must be noticed that modern communication standards between base transceiver stations 50 (BTS) and mobile terminals 52 foresee a 'frequency hopping' procedure which at discrete time intervals introduces a change in the radio channel or carrier frequency assigned to the mobile user 52 to communicate.

With the method of the invention, the co-channel interference between the two mobile users belonging to adjacent cells and arranged according to figure 3 should be limited to a short time during which both the users employ the same radio channel to communicate.

The present invention foresees also a possible embodiment of the intelligent radiant system 1 employed by one base transceiver station at least forming the cluster of stations (BTS) described above.

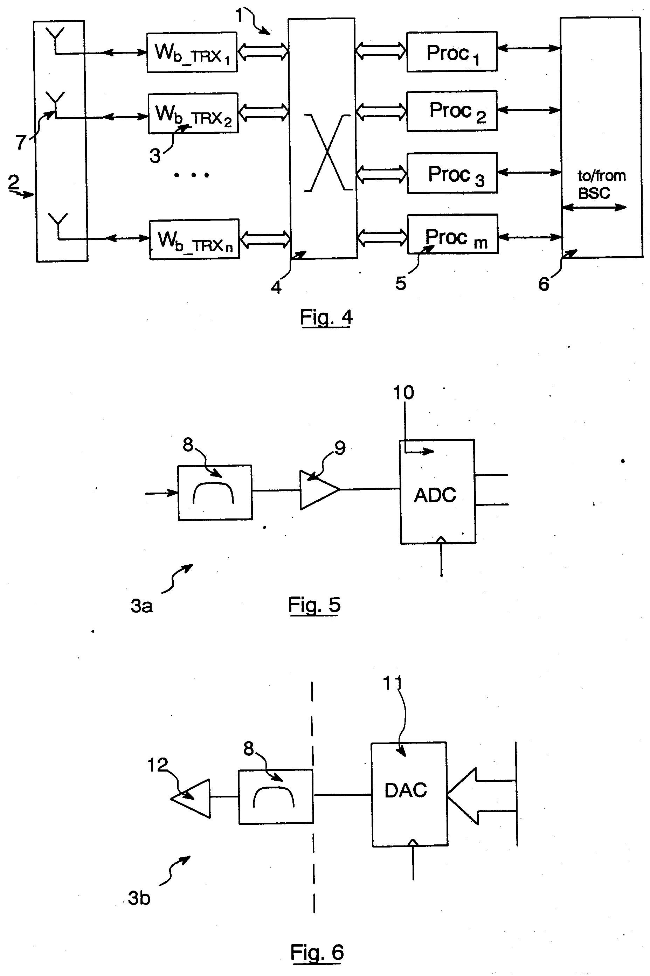

Said intelligent radiant system shown in figure 4, includes:
an array 2 of n radiating elements 7, each element 7 being supplied separately;
a plurality of broad band transceivers 3 (Wb_TRX) in a number n each connected at input to a corresponding radiating element 7 forming the array 2;
a plurality of process modules 5 in a number equal to m radio channels or carrier frequencies assigned to the base transceiver station, each process module being capable to communicate with all the broad band transceivers 3 (Wb_TRX);
an interconnection matrix 4 nxm between the outputs of transceivers 3 (Wb_TRX) and the inputs of process modules 5;
a control program associated to each process module 5, adapted to reconstruct the communication coming from a mobile user and able to act on array 2 so to dynamically modify the lighting angular profile according to the angular direction of the mobile user to connect.

A possible approach to realize dynamically modifiable directive radiation diagram is to have recourse to a general array of antennas consisting of mobile radiating elements, checking at the same time their space position to change directivity.

However, in the present invention, a new approach is proposed to dynamically change the directivity with the electrical supply of each radiant element 7 forming the array 2 in an adequate manner with a pre-set electrical phase-shifting variable in time.

Figure 13 has the function to better clarify the innovative principle standing at the basis of the present invention.

In this figure, with 1, 2, ..., n are indicated a same number of antenna elements of array 2 placed at a definite distance and for instance equal to λ. If the wave front emitted by the mobile user dynamically lighted by the array of antennas and therefore emitting the useful signal u falls on the above mentioned array of antennas with an angle Θ ,the wave front fu reaches the antenna element 1 first, and then element 2, and so on, up to reaching element n.

Signals picked up by the n antennas are equal among them but phase shifted by a quantity ϕ, function of the above mentioned angle Θ and of the distance between antenna elements.

In this figure the antenna elements are shown aligned among them, but can be arranged according to whichever position, known a priori.

The process module processing said signals is adapted to recognize the n replicas and is also adapted to align in phase said replicas and to sum re-aligned signals in such a way to obtain a signal having level equal to eight times the level of the signal received from a single antenna element. In other words, only for the signal falling on the array of antennas having angle Θ, a gain is obtained.

In fact, assuming that an interfering signal i falls on the array of antennas with an angle Γ, said signal (interfering wave front fi) reaches the element of antenna 8 first and so on, up to reaching last the element 1. In this case it is evident that the re-aligning operation made by the above mentioned process module and enabling to increase by n times the level of the useful signal u, determines a destruction of the interfering signal i because phase re-alignment, which is functional to the purposes of an increase in the useful signal level, results to be destructive for interfering signals enabling to definitely increase the useful signal/interfering signal ratio, versus the known systems.

If one wants to increase said ratio it is opportune to perform the above mentioned phase re-alignment operation and subsequent sum of signals. However, said operation has not to be considered in the limitative way since other frequency or time processing types are possible.

The same rule described above applies to the transmission side since n replicas of the signal to be transmitted are produced first and then phase shifted by a quantity such to re-combine in air in phase only in the direction coinciding with the angle Θ, transforming an array of omnidirectional antennas in an intelligent directive antenna.

In other words, according to the invention, the n antenna elements are aligned according to a direction resulting to be perpendicular to the d_max direction of maximum signal propagation, that is to the direction for which no phase re-alignment by the process modules is required. A re-alignment operation is equal therefore to virtually shift the plan containing the n antenna elements of a rate equal to the angle Θ and then operate time by time as the useful signal u has come from the d_max maximum propagation direction.

In conclusion, the invention foresees the presence of n, for instance equal to 8, broad band transceivers and of a number of process modules equal to the number of carrier frequencies assigned to the subject base transceiver station.

When the increase of the number of carrier frequencies assigned to the base transceiver station is requested, it is sufficient to increase the number of process modules which are actually implemented with digital circuits and therefore more simple of analogue circuits required to implement the transceivers.

In case of realization of the base transceiver station with narrow band transceivers of the type shown in fig. 14, it would have been necessary to install n . m transceivers, where n is the number of antenna elements and m is the number of carrier frequencies assigned to the base transceiver station, and in addition the installation of n "combining" networks, thus facing a high complexity degree difficult to control.

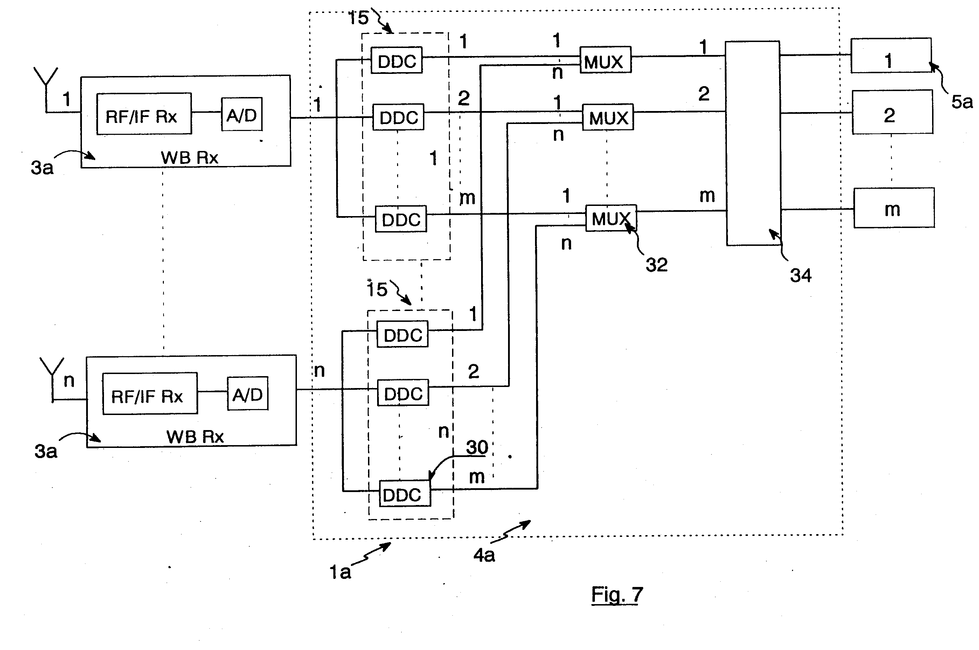

The switching matrix in figure 4 shall not be taken for the switching matrix of figure 14, since according to the known technique, said matrix actually connects each broad band transceiver to all the process modules. The function of implementation of the frequency hopping algorithm which, according to the known diagram of figure 14 is made by the matrix, in the diagram of the invention is performed by the unit identified with the number reference 34 in figure 7.

The intelligent radiant system of the station (BTS) has been described up to now with functional blocks whose characteristics shall be specified below, giving also examples of the embodiment.

The system, so articulated, profitably shows a modular architecture which can be easily configured both for transmission and receipt, where the directivity of the radiation diagram and the number of mobile users served by the base transceiver station are parameters without any correlation.

The directivity results as a function of the sole number of radiating elements 7 forming the array 2 while the number of mobile users which can be served, depends on the number of process modules 5 available at the station.

The base transceiver station of the type described above can be interfaced with a communication network connecting fixed users to extend the advantages of the intelligent radiant system also to communications between fixed and mobile users.

In addition, to enable a digital processing of radio signals collected by each transceiver 3 (Wb_TRX) it is foreseen that the relevant outputs are coded through a plurality of binary lines.

This is particularly useful since the different standards which can be adopted for communications between mobile users and base transceiver stations (BTS) require different digital processings.

It must be underlined in fact how the base transceiver stations (BTS) described above is not strictly tied to a pre-set communication standard, but it can be configured according to the requirements at different communication standards.

The base transceiver stations (BTS) configured as receiver 1a is now described, focusing the attention on the transceiver 3a and on the interconnection matrix 4a.

In order to facilitate the perception of these particulars, it is worth to briefly repeat the principle governing the receipt of the base transceiver station.

The base transceiver stations (BTS) collects a sum signal consisting of all the radiofrequencies of the m radio channels assigned to the station itself. Said sum signal is broken down into a number of n components or replicas, each n-th component being detected by the corresponding radiating element 7 n-th included in the array 2. A digitalization phase performed by the transceiver 3a n-th enables to obtain on its output a set of samples at intermediate frequency coded on a plurality of binary lines.

Each n-th component, binary coded and transferred at intermediate frequency, is made available through the connection matrix 4a to each m-th process module. Each m-th process module 5a takes care of the reconstruction of the communication coming from the m-th user through processing of its n-th components.

The transceiver 3a, represented in the block diagram of figure 5, includes a broad band filter 8 connected in series to an amplifier block RF/IF 9 followed in cascade by an analogue-to-digital converter 10.

The broad band filter 8 is used to permit the passage of the n-th component of the sum signal, thus profitably enabling to receive communications coming from mobile users according to different possible standards. Said standards are characterized in the different occupation of the frequency band.

The amplifier block RF/IF is used to transfer at intermediate frequency the n-th component filtered by the block 8. This is necessary to enable the digitalization phase of the n-th component considering the present limits imposed by to-day's technologies.

The analogue-to-digital converter 10 samples the intermediate frequency n-th component at a sampling frequency double at least of the frequency band occupied by the sum signal of the m radio channels. At the output of the analogue-to-digital converter 10 the samples of the n-th component digitally coded on its plurality of binary lines are obtained.

Said samples are available to each process module 5a in serial mode through an interconnection matrix 4a or through a bus system as described below.

The interconnection matrix 4a of the nxm type is realized connecting among them a plurality of digital functional blocks shown in figure 7 according to a possible connection scheme.

Said plurality of digital blocks includes:
nxm selective blocks 30 of the DDC (Digital Down Converter) type to transfer downward and filter in base band the intermediate frequency n-th component placed at input of a selective block 30, each group 15 being associated to a given transceiver 3a n-th and having selective m blocks 30 (DDC) tuned each one on the intermediate frequency corresponding to the m-th radio channel;
m multiplexer blocks 32, each one of them having n inputs, each input corresponding to a n-th group 15 of selective blocks 30, and a sole output associated to the m-th radio channel;
a switching block 34, having m inputs and m outputs, performing the frequency hopping function or switches on a different process module the entering signals, when the process module to which the same were originally sent is failed.

More in detail we can notice that the interconnection matrix 4a nxm has the following connections:
the output of each transceiver n-th 3a is connected to the inputs of the group 15 n-th consisting of selective blocks 30 (DDC);
the output of each selective block (DDC) 30 of group n-th is connected to the n-th input of the multiplexer block 32 m-th;
the outputs of the m multiplexer blocks 32 are connected to the m inputs of the switching module 34 which takes also care of the connection of its m inputs to a same number of process modules 5a.

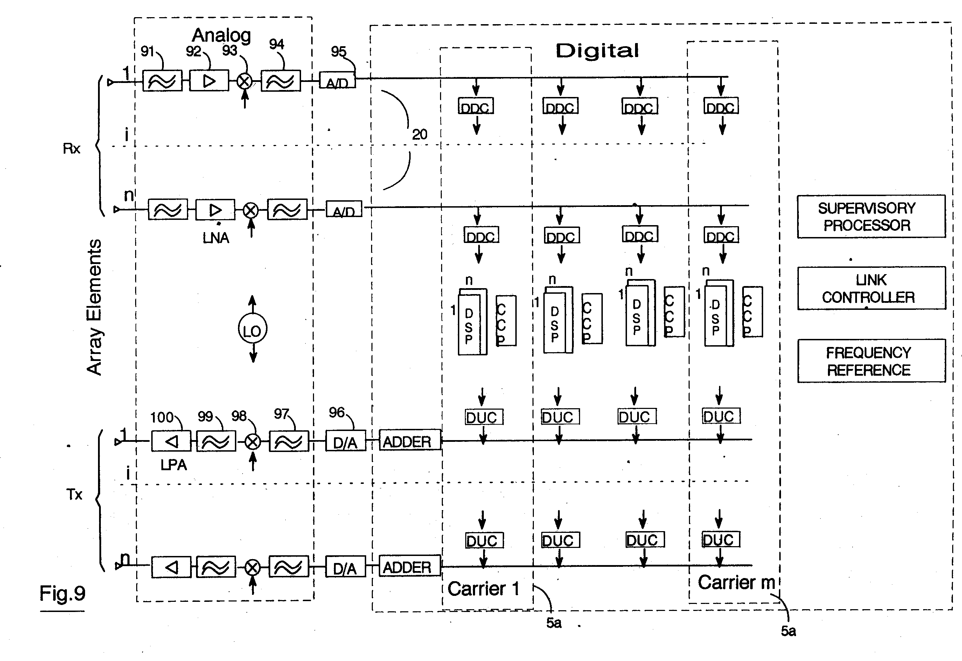

Another possible embodiment of the interconnection matrix 4a, foresees to use, as shown in figure 9, a connection bus 20 having n wires to make available in parallel mode to each m-th process module 5a the n components of the sum signal of the m radio channels.

This last proposed solution is characterized in its exceptional simplicity, but has as a consequence a considerable processing load for each process module 5a. In fact, each module 5a, before proceeding to the reconstruction phase of the communication associated to the n-th user shall accomplish the tuning on the m-th radio channel for each n-th component received at its inputs.

In this case in fact DDC units previously allocated in the switching matrix are in this case allocated inside the process modules.

From the evaluation of this figure Rx receipt side, it results clear that after the image fitter 91 and the low noise amplifier 92 LNA, the signal representing the whole band of the system is converter 93 into a fixed intermediate frequency IF. After the anti aliasing filter 94, it is connected the analogue/digital converter A/D 95, feeding through bus a array of DDC (one each fixed frequency or hopping carrier). All DDCs operating on the same carrier frequency, supplied by the different antenna elements, revert to a group of carrier processors or DSP (Digital Signal Processor), whose number is equal to the number of physical channels performing beamforming functions in base band and demodulation.

In addition to the blocks described, other supervision, control and O/M functions shall be present, shown in the figure with the following wording:
- "supervisory processor", dedicated to the control of common parts and of download,
- the "frequency reference" from which all the necessary frequencies and clocks shall be obtained
- the "link controller" for the management of PCM flows (interface A-bis).

When evaluating said figure from the Tx transmission side, the same values of coefficients at beamforming obtained during receipt are considered valid and used on the transmission slots for the Tx beamforming. This is made sending the base band component to be transmitted with the due width and phase relations to Digital Up Converters DUC relevant to the same carrier frequency.

In other words, assuming that the mobile user has previously sent a signal to the base transceiver station from a direction deviating of an angle Θ versus the plan containing the complex of antenna elements and that the single antenna elements has received said signal with a delay ϕ versus the contiguous antenna element, Tx transmission side, n replicas of the signal are produced to be sent to said user and each replica is cumulatively submitted to a phase delay ϕ before being sent to the corresponding DUC unit.

For each antenna element, the signals corresponding to the output of each DUC unit relevant to the same carrier frequency are digitally summed up with an ADDER specific unit and said sum is converted in the analogue form through a corresponding unit D/A 96. Said signal represents the whole band of the system at a fixed IF.

After reconstruction filter 97, the IF is converted 98 at radiofrequency, filtered 99 and amplified 100 through a linear amplified LPA (Linear Power Amplifier).

As already said, this process is made for each element of the antennas array.

It is evident to the skilled in the art that since the n replicas of the signal relevant to a unique carrier frequency are phase shifted by a quantity ϕ, said n replicas will recombine in phase only in the direction defined by the angle Θ and therefore the system of the invention can be labeled as system equipped with intelligent antenna whose directivity is a function of the above mentioned phase delay ϕ.

The two proposed solutions (matrix solution and bus solution) are an alternative one of the other but they meet different needs depending on the intention to share the processing load, see the case of matrix 4a including selective blocks DDC, or to concentrate the same only on process modules 5a through the connection bus 20.

Likewise, the bus solution is characterized in its exceptional simplicity but has as a consequence an increase of the processing load for each process module 5a.

Finally, the bus approach of figure 9 foresees that the "digital down converter" function performed in said figure by DDC units is transferred in process modules and therefore each broad band transceiver puts at disposal of the M process modules the whole spectral signal received.

Each process module shall have inside in this case a bench of n DDC units digitally tuned on the carrier frequency concerning the process module considered.

In this case, to perform the frequency hopping function it is sufficient to digitally modify the filtering frequency of the n DDC placed at the input of each process module.

As for effectiveness (number of interconnection wires between transceivers and process modules), the solution of figure 9 is more advantageous (it requires only n wires) than the solution shown in figure 7 (requiring on the contrary n . m wires) which in its turn has the advantage to operate with process modules on already filtered signals and therefore on signals showing a lower bit rate.

Without departing from the scope of the present invention, it is possible to place DDC and DUC units in blocks different from those considered above such as for instance inside the broad band transceivers.

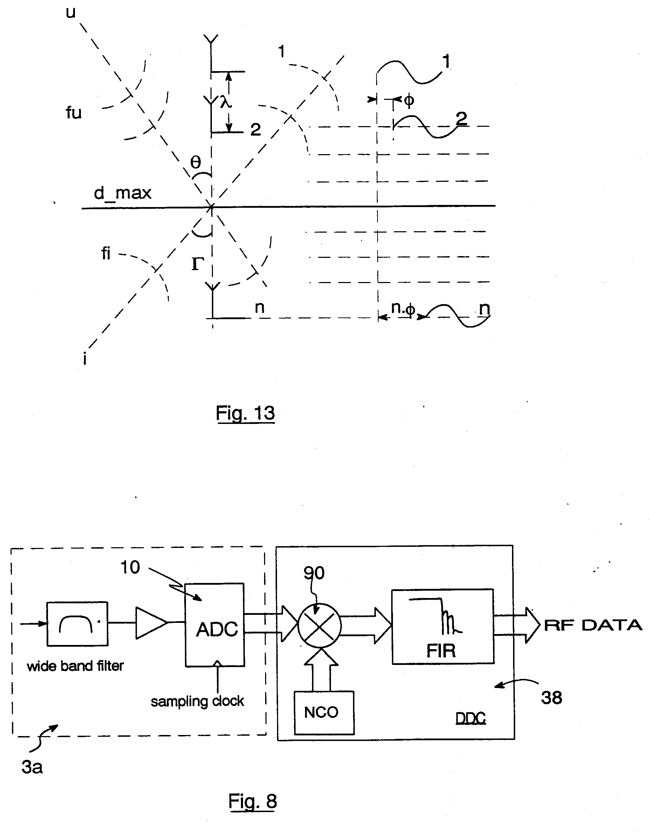

Concerning the implementation of the selective block 30 DDC in figure 8, a possible embodiment is proposed. The output of the transceiver 3a n-th, coinciding with the output of the analogue-to-digital converter 10 coded on its plurality of binary lines, is connected to a first input of a digital multiplier 90 receiving at a second input a signal of local oscillator. The local oscillator signal is produced by a NCO (Numerically Converter Oscillator) tuned at an intermediate frequency corresponding to the m-th radio channel.

The output of the digital multiplier is then connected at input to a digital filter (FIR) to obtain the translation in base band of the n-th component versus the tuned m-th radio channel.

The so-configured DDC block has a good flexibility given by the possibility to re-program the digital filter (FIR) to change the selectivity of the block itself versus the selected m-th channel.

Going back to the first embodiment of the present invention, that is to the embodiment foreseeing the use of the interconnection matrix instead of the BUS system previously described making reference to figure 9, the base transceiver station (BTS) is now described configured as transmitter 1b focusing the attention on the transceiver 3b and on the interconnection matrix 4b.

In order to facilitate the perception of these particulars, it is worth to briefly repeat the principle governing the transmission of the base transceiver station.

Each m-th module 5b takes care of the serial construction of the communication associated to each m-th user through the creation of n synthetized components in base band.

Each n-th component, binary coded and transferred at intermediate frequency, is afterwards put at disposal through the connection matrix 4b of each 3b n-th transceiver WB_Tx.

At the input of each 3b n-th transceiver, a sum signal shall be present, digitalized at intermediate frequency, consisting of m n-th components, each n-th component coming from the corresponding process module m-th 5b. This sum signal shall be converted in a radiofrequency analogue signal including the m components n-th, each m-th component being transmitted on the m-th radio channel. The radiofrequency analogue signal is then irradiated by the corresponding element 7 n-th included in array 2.

The transceiver 3b, represented in the block diagram of figure 6, includes a digital-to-analog converter 11 followed by a broad band filter 8 connected in series to an amplifier block 12 RF/IF.

The digital sum signal is therefore converted by the digital-to-analogue block 11 in a corresponding analogue sum signal at intermediate frequency including the m n-th components.

The corresponding analogue sum radiofrequency signal is then filtered by a broad band filter 8 in a profitable manner to enable the transmission from the base transceiver station towards mobile users according to different possible standards.

These standards feature for the different occupation in the frequency band.

The amplifier block IF/RF performs the function to transfer in frequency the corresponding analogue sum signal at intermediate frequency in an analogue radiofrequency signal including the m n-th components, each component being transmitted on the m-th radio channel. The analogue radiofrequency signal is then radiated by the corresponding element 7 n-th included in array. 2.

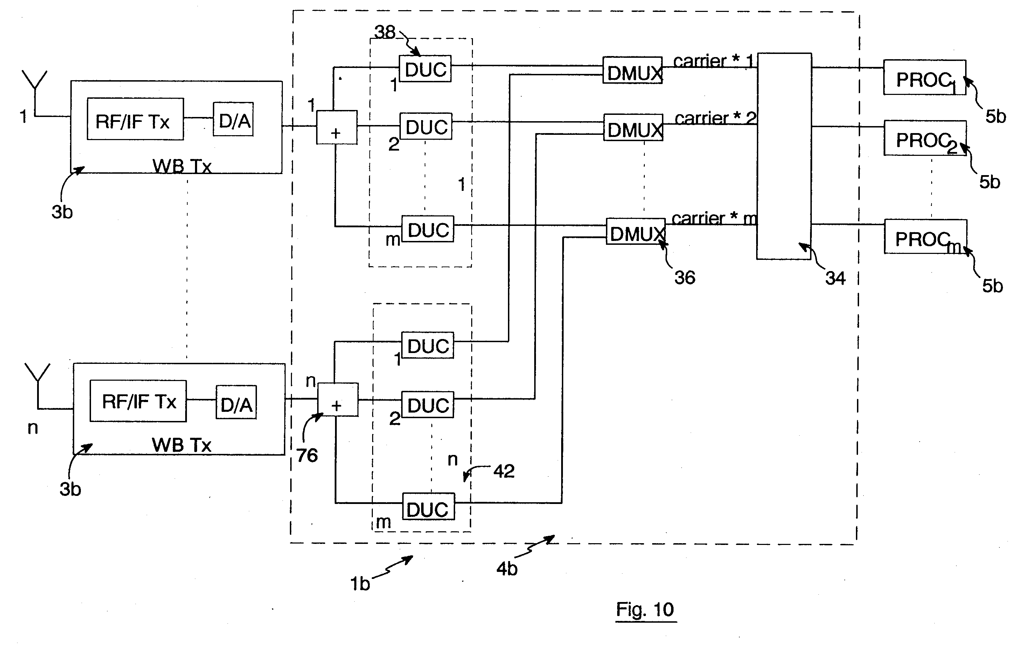

The matrix 4b of interconnections of the nx, type is made connected among them a plurality of digital functional blocks represented in figure 10 according to a possible connection scheme.

This plurality of digital blocks includes:
a switching block 34 fit with m inputs and m outputs connected between them according to a pre-set program;
m demultiplexer blocks 36 (where e.g. m=16 and n=8), each demultiplexer block 36 being equipped with a sole input associated to the m-th radio channel and n outputs;
nxm modulator translator blocks 38 of the DUC (Digital Up Converter) type to modulate and transfer at intermediate frequency the n-th component positioned at the input of a block 38, said blocks 38 being divided into n groups 42, being each group 42 being associated to a given transceiver 3b n-th and having m blocks 38 DUC corresponding each one to the m-th radio channel, each 38 m-th block being associated to the n-th output of the m-th demultiplexer block 36;
n adder nodes 76 having each a number m of inputs and an output corresponding to the transceiver 3b n-th.

More in detail it is possible to notice how the matrix 4b nxm of interconnections has the following connections:
the m outputs of the processing module 34 are connected to the inputs of the m demultiplexer blocks 36;
the n-th output of each demultiplexer block 36 is connected to the m-th input of the modulator translator block 38 belonging to the group 42 n-th;
the m outputs of each group 42 n-th of modulator translator blocks 38 are connected to the inputs of the n-th adder node;
the output of each adder n-th node is connected to the corresponding n-th input of the transceiver 3b.

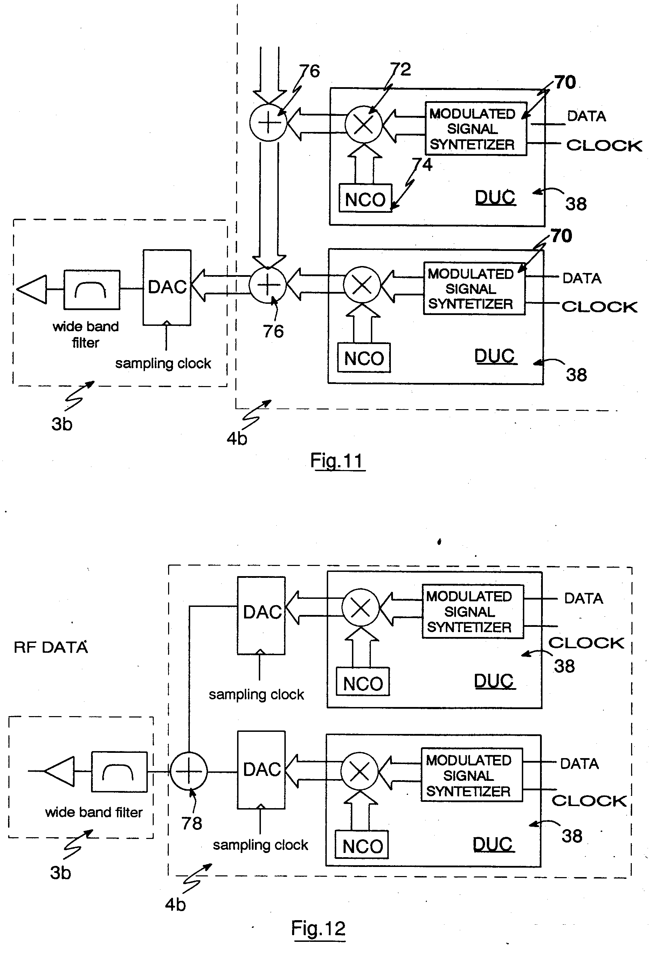

Concerning the implementation of the modulator translator blocks 38 DUC in figure 11, a possible embodiment is proposed. Each block 38 m-th, belonging to the n-th block, consists of a modulation and synthesis block 70 of the n-th component associated to the m-th user having the output connected to a first input of a digital muitiplier block 72. A second input of the digital multiplier block is connected on the output of a NCO 74 block producing a local oscillator signal at intermediate frequency corresponding to the m-th radio channel. The output of the muitiplier block coinciding with the output of the DUC block itself is connected at input to the n-th adder node 76 corresponding to the group 42 n-th.

The block DUC so configured enables to transfer the n-th component associated to the m-th user at intermediate frequency, choosing among a plurality of programmable modulations acting on the synthesis algorithm of the modulation block 70.

It is also possible to foresee through programming of the NCO block a change of the radio channel assigned to the n-th user.

Figure 12 shows a technical solution equivalent to that shown in figure 10 and 11 in which the digital n-th adder associated to each transceiver 3b is replaced by an adder 78 of the analogue type. This solution foresees in fact that the output of each block DUC 38 forming the group 42 n-th is connected at input to its own digital-to-analogue converter. Each output of the digital analogue converter is connected in its turn to the n-th analogue adder 78 to produce at output the analogue sum signal referred to the n-th component of all the m-th radio channels. Adopting this technical solution the transceiver 3b will include only the broad band filter 8 and the amplifier/translator block IF/RF. As it can be noticed on figure 12 the output of the analogue n-th adder is connected at input to the broad band filter 8.

This solution is used to attenuate linearity problems tied to the digital-to-analogue converter when the dynamic of the input signal is particularly wide. This occurs when the base transceiver station has a high number of user to manage and many process modules 5b.

Finally, the cluster of base transceiver stations having at least a base transceiver station equipped with the intelligent radiant system enables to satisfy a high number of users on the assigned coverage area improving also the transreceipt quality between the mobile user and the base transceiver station.

The base transceiver station can also be configured for different possible communication standards characterized both for the different processing of the radiofrequency signal and for the occupation in the frequency band.

Therefore, while two particular embodiments of the present invention have been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. Communication method between a base transceiver station of a land mobile radio communication system and a mobile user at least in the coverage area of said base transceiver station, characterized in that it foresees the step of illuminating the coverage area assigned to the base transceiver station with an angular profile which can be dynamically modified.

2. Method according to claim 1, characterized in that said illuminating step of the coverage area assigned to the base transceiver station with an angular profile which can be dynamically modified, is made with the implementation of the following steps in the transmission of signals from the mobile users to the base transceiver station:
• arranging, according to a predetermined relation and according to a predetermined reciprocal distance, a plurality of n antennas forming part of an array of antennas;
• receiving, through said antenna array and through n receivers, by the mobile user, the signal emitted by the same in order that at the output of each antenna element of said array of n antenna elements, correspond n replicas of the original signal, phase shifter between them, which are function of the user position versus said array of antennas and of the distance between each single antenna element;
• converting in the digital form the above mentioned n replicas of the radiofrequency signal;
• performing the spectral translation in base band and filtering the digital signals relevant to the above mentioned n replicas of the original signal;
• processing the above mentioned n replicas of the original signal to obtain parameters representing the signal arrival direction;
• reconstructing the original signal,
method also characterized in that in the transmission of signals from the base transceiver station to the same mobile user, foresees the following steps:
• breaking down the base band digital signal to send to the mobile user in a number n of digital phase shifted replicas, of an amount which is function of the above mentioned parameters representing the signal arrival direction;
• performing the radiofrequency spectral translation of the digital signal;
• converting in the analogue form said n signal replicas;
• sending each one of said n replicas to a respective cascade transmitter to which a respective antenna element of the complex of n antenna elements is connected.

3. Method according to claim 2, in which said base transceiver station employs a number m of radio channels, characterized in that it foresees also the step of interconnecting said n transceivers with m processing means.

4. Method according to claim 3, characterized in that said n receivers consist of broad band receivers and in that to foresee the additional step to convert in base band, through an array of m digital down converters (DDC) each one of the n replicas of each radio channel.

5. Method according to claim 3, characterized in that said transmitters consist of broad band transmitters and in that to foresee the additional step to convert in radiofrequency through an array of m digital up converters (DUC) each one of the n replicas of each radio channel.

6. Method according to claim 2, characterized in that said reconstruction step of the signal is made through phase re-alignment of said n replicas and adding the n replicas re-aligned.

7. Method according to claim 2, characterized in that said reconstruction step of the signal is made performing processing types in frequency or in time.

8. Base transceiver station of a land mobile radio communication system suitable to implement the transreceipt of signals from and to a plurality of mobile users in the coverage area of a base transceiver station, characterized in that said base transceiver station includes an intelligent radiant system adapted to illuminate the assigned coverage area with an angular profile which can be dynamically modified.

9. Base transceiver station according to claim 8, characterized in that the intelligent radiant system includes:
• an array (2) of n radiant elements, each element (7) being separately supplied;
• a plurality of broad band transceivers (3) (Wb_TRX) in a number n each connected at input to a corresponding radiating element (7) forming the array (2);
• a plurality of process modules (5) in a number equal to m radio channels assigned to the base transceiver station, each process module being capable to communicate with all the broad band transceivers (3) (Wb_TRX);
• interconnection means (4, 20) nxm between the outputs of transceivers (3) (Wb_TRX) and the inputs of process modules (5);
• a control program associated to each process module (5), adapted to reconstruct the communication coming from a mobile user and able to act on array (2) of radiant element so to dynamically modify the illuminating angular profile according to the angular direction of the mobile user to connect.

10. Base transceiver station according to claim 9, characterized in that in one base transceiver station at least there is no correlation between the number n of transceiver elements (3) and the number m of process modules (5).

11. Base transceiver station according to claim 9, characterized in that all the process modules (5) interface with a communication network (6) connecting fixed users.

12. Base transceiver station according to claim 9, characterized in that it can be configured as a receiver (1a).

13. Base transceiver station according to claim 9, characterized in that it can be configured as a transmitter (1b).

14. Base transceiver station according to claim 12, characterized in that each transceiver (Wb_TRX) (3a) includes a broad band fitter (8) connected in cascade with a block (9) adapted to translate in frequency an input radiofrequency signal at an output intermediate frequency, followed by an analogue-to-digital converter (10).

15. Base transceiver station according to claim 13, characterized in that each transceiver (Wb_TRX) (3b) includes an analogue-to-digital converter (11) connected in series to a broad band fitter (8) followed by a block (12) adapted to translate an input intermediate frequency at an output radiofrequency signal radiated through the associated element (7).

16. Base transceiver station according to claim 9, characterized in that said interconnection means consist of a matrix system.

17. Base transceiver station according to claim 9, characterized in that said interconnection means consist of a bus system.

18. Base transceiver station according to claims 12 and 16, characterized in that said interconnection matrix structure (4a) nxm includes a plurality of digital functional blocks, out of which:
• nxm selective blocks (30) of the digital down converters (DDC) type to translate downward and filter in base band a signal at intermediate frequency placed at the input of a selective block (30) said block being divided into n groups (15), each group (15) being associated to a given transceiver (3a) m-th and having m selective blocks (30) (DDC) tuned each one on the intermediate frequency corresponding to the m-th radio channel.
• m multiplexer blocks (32), each multiplexer block (32) equipped with n inputs, each one corresponding to a n-th group (15) of selective blocks (30) and a unique output associated to the m-th radio channel;

19. Base transceiver station according to claims 13 and 16, characterized in that said interconnection matrix structure (4b) nxm includes a plurality of digital functional blocks, out of which:
• m demultiplexer blocks (36), each demultiplexer block (36) being equipped with a unique input associated to the m-th radio channel and with n outputs;
• n.m modulator-translator blocks (38) of the digital up converter (DUC) type to translate upward a base band signal placed at the input of a selective block (38), said blocks (38) being divided into n groups (42), each group (42) being associated to a given transceiver (3b) n-th and having m modulator-translator blocks (38) (DUC) corresponding each one to the m-th radio channel, each block (38) n-th being associated to the n-th output of the n-th demultiplexer block (36);
• n adder nodes (76) each one having a number m of inputs and output corresponding to the n-th transceiver (3b).

20. Base transceiver station according to claims 9, 12 and 17, characterized in that each of said m process modules includes also n selective blocks (DDC) suitable to translate downward and filter in base band a signal at intermediate frequency to be inlet on said bus.

21. Base transceiver station according to claims 9, 13 and 17, characterized in that each of said m process modules includes also n modulator-translator blocks (38) (DUC) suitable to transfer at radiofrequency a signal destined to be inlet on said bus.

22. Base transceiver station according to claims 9, 12 and 17, characterized in that each of said n broad band receivers includes also m selective blocks (DDC) suitable to transfer downward and filter in base band a signal at intermediate frequency to be inlet on said bus.

23. Base transceiver station according to claims 9, 13 and 17, characterized in that each of said n broad band transmitters includes also m modulator-translator blocks (38) (DUC) suitable to transfer at radiofrequency a signal destined to be inlet on said bus.

24. Base transceiver station according to claim 18, characterized in that it includes also a switching block (34) equipped with m inputs and m outputs connected between them according to a pre-set program;

25. Base transceiver station according to claim 19, characterized in that it includes also an additional switching block (34) equipped with m inputs and m outputs connected between them according to a pre-set program;

26. Cluster of base transceiver station to transreceive signals from and to a plurality of mobile users, one station at least employing a number m of radio channels to enable the communication of mobile users present in a coverage area assigned to the base transceiver station, characterized in that said one base transceiver station at least includes an intelligent radiant system capable to light the coverage area assigned with an angular profile which can be dynamically modified.
